# EUROPEAN PATENT SPECIFICATION

(11) **EP 3 539 767 B1**
(45) Date of publication and mention of the grant of the patent: **23.12.2020**
(21) Application number: 18162400.8
(22) Date of filing: 16.03.2018
(51) Int. Cl.: B32B 25/08, B32B 25/14, B32B 25/18, B32B 27/08, B32B 27/30, B32B 27/32

(54) **A SEALING DEVICE WITH REDUCED BLOCKING**
DICHTUNGSVORRICHTUNG MIT REDUZIERTER BLOCKIERUNG
DISPOSITIF D'ÉTANCHÉITÉ AVEC BLOCAGE RÉDUIT

(43) Date of publication of application: 18.09.2019
(73) Proprietor: SIKA TECHNOLOGY AG, 6340 Baar (CH)
(72) Inventor: KNEBEL, Oliver, CH-6204 Sempach (CH); ROSKAMP, Robert, CH-6460 Altdorf (CH); SCHOENBRODT, Simon, CH-6060 Sarnen (CH); FLUECK, Armin, CH-6064 Kerns (CH)
(74) Representative: Sika Patent Attorneys

(56) References cited:
- WO-A1-2017/108843
- WO-A1-2017/108846
- WO-A1-2018/122113
- US-A- 5 422 179
- US-A1- 2013 157 048
- US-B1- 6 194 049

## Description

### Technical field

The invention relates to polymeric sealing devices, which can be used for waterproofing of underground and above ground constructions, in particular for waterproofing of roofing structures.

### Background of the invention

Polymeric sheets, which are often referred to as membranes or panels, are commonly used to protect underground and above ground constructions, such as basements, tunnels, and flat and low-sloped roofs, against penetration water. State-of-the-Art waterproofing membranes include single-ply roofing membranes composed of one single waterproofing layer and multi-ply roofing membranes composed of two or more waterproofing layers having same or different compositions.

Commonly used materials for waterproofing membranes include plastics, in particular thermoplastics such as plasticized polyvinylchloride (p-PVC), thermoplastic elastomers (TPE), in particular thermoplastic olefins (TPO), and elastomers such as ethylene-propylene diene monomer (EPDM). The waterproofing membranes are typically delivered to a construction site in rolls, transferred to the place of installation, unrolled, and adhered to the substrate to be waterproofed. The substrate on which the waterproofing membrane is adhered may be comprised of variety of materials depending on the installation site. The substrate may be, for example, a concrete, metal, or wood deck, or it may include an insulation board or recover board and/or an existing membrane.

Depending on the application, the waterproofing membrane should be able to conform to various requirements. In roofing applications, the waterproofing membrane should have high enough mechanical strength in order to resist the shearing forces applied on it, for example caused by wind loads. In addition, the membrane should have high flexibility to enable easy installation on surface of roofing substrates, especially in corner and edge areas. Typically it is also advantageous that the material of the membrane is heat-weldable, i.e. the membranes can be adhered to each other by thermal bonding without using an adhesive or other adhering means.

Waterproofing membranes based on crosslinked EPDM are very flexible and resistant to weathering but they are not heat-weldable due to the chemically crosslinked structure of the polymer base. Consequently, seams between EPDM membranes have to be sealed using welding tapes produced from different materials than the membrane such as uncrosslinked EPDM or bonded with special adhesives developed for the crosslinked EPDM materials. Membranes composed of thermoplastic olefins (TPO) are heat-weldable and less expensive than EPDM-membranes but they are also more rigid which decreases their suitability for roofing applications. Membranes based on plasticized PVC are more flexible than TPO-based membranes but also they contain environmentally harmful plasticizers and heavy metal additives such as flame retardants that may restrict their use in some applications.

Due to the heat-weldability and lower production costs compared to crosslinked EPDM-membranes, TPO-membranes have gained a significant market share especially in European markets. In order to increase the flexibility of TPO-membranes, various approaches have been suggested. One approach is based on using multilayer membrane systems comprising a flexible EPDM-based core layer with top and bottom layers based on more rigid TPO-materials. Another approach has been to develop new TPO-compositions comprising increased amount of the elastomer component. However, increasing the elastomer content typically results in compositions with increased tackiness. Membranes produced using such compositions also exhibit increased blocking, which complicates various post-processing steps of the membranes such as cutting, welding, stacking, and unwinding from a roll. Blocking refers here to the increased adhesion of two adjacent polymeric layers. It occurs due to the presence of van der Waals forces between amorphous regions of the polymers. These forces increase with reduced distance between the two layers and, therefore, blocking increases when the layers are pressed together.

Various organic and inorganic antiblocking agents have been used to decrease the blocking of polyolefin layers. The tackiness of TPO-materials can also be reduced by crosslinking at least part of the elastomer component. Such modified TPO's can be obtained by melt-blending a statically or dynamically crosslinked elastomer component with a plastic component. TPEs containing a dynamically vulcanized (crosslinked) elastomer component are also known as thermoplastic vulcanizates (TPV, TPE-v). Despite the introduction of flexible TPO-compositions having decreased tackiness, blocking is still a problem especially if the membranes are stored in form of rolls for longer period of time in hot climate regions. WO2017108843 and WO2017108846 disclose a waterproof membrane with mineral binder or solid filler.

There is thus a need for a new polymeric sealing device, which exhibits reduced blocking when stored in form of rolls, in particular at elevated temperatures.

### Summary of the invention

The object of the present invention is to provide a sealing device comprising a waterproofing membrane having reduced blocking.

Another objective of the present invention is to provide a sealing device, which can be joined to other sealing devices having similar composition and to other polymeric articles such as waterproofing membranes by heat-welding.

It was surprisingly found out that the blocking of thermoplastic waterproofing membranes can be effectively reduced with a protective film comprising a backing layer attached to the bottom surface of a membrane through thermal bonding.

The subject of the present invention is a sealing device as defined in claim 1.

One of the advantages of the sealing of the present invention is that the blocking of the waterproofing membrane can be effectively reduced without having any negative effects on the mechanical properties of the waterproofing membrane.

Another advantage of the sealing device of the present invention is that the edges of adjacent membranes can be joined together by heat-welding without removal of the protective film.

Other aspects of the present invention are presented in other independent claims. Preferred aspects of the invention are presented in the dependent claims.

### Brief description of the Drawings

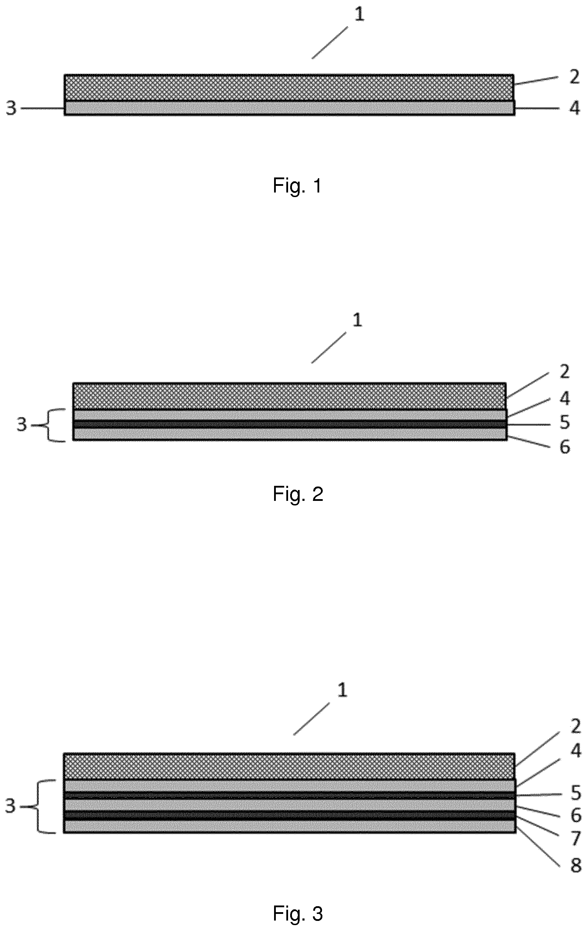

Fig. 1 shows a cross-section of a sealing device (1) comprising a waterproofing membrane (2) and a protective film (3) comprising a backing layer (4), which is directly attached to the bottom surface of the waterproofing membrane (2).
Fig. 2 shows a cross-section of a sealing device (1) according to one embodiment of the present invention, wherein the protective film (3) comprises a backing layer (4), which is directly attached to the bottom surface of the waterproofing membrane (2), a second backing layer (6), and a barrier layer (5), which is located between the backing layers.
Fig. 3 shows a cross-section of a sealing device (1) according to another embodiment of the present invention, wherein the protective film (3) comprises a backing layer (4), which is directly attached to the bottom surface of the waterproofing membrane (2), a second backing layer (6) and a first barrier layer (5), which is located between the first and second backing layers (4, 6) as well as a third backing layer (8) and a second barrier layer (7), which is located between the second and third backing layers (6, 8).

### Detailed description of the invention

The subject of the present invention is a sealing device (1) comprising:
a) A waterproofing membrane (2) having top and bottom surfaces and comprising at least one polymer **P1** and
b) A protective film (3) comprising a backing layer (4) comprising at least one polymer **P2,** wherein the backing layer (4) is directly attached over at least part of its surface to the bottom surface of the waterproofing membrane (2) through thermal bonding.

Substance names beginning with "poly" designate in the present document substances which formally contain, per molecule, two or more of the functional groups occurring in their names. For instance, a polyol refers to a compound having at least two hydroxyl groups. A polyether refers to a compound having at least two ether groups.

The term "polymer" refers to a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "elastomer" refers to any polymer or combination of polymers, which is capable of recovering from large deformations, and which can be, or already is, modified to a state in which it is essentially insoluble (but can swell) in a boiling solvent. Typical elastomers are capable of being elongated or deformed to at least 200% of their original dimension under an externally applied force, and will substantially resume the original dimensions, sustaining only small permanent set (typically no more than about 20%), after the external force is released. As used herein, the term "elastomer" may be used interchangeably with the term "rubber."

The term "a-olefin" designates an alkene having the molecular formula CₓH₂ₓ (x corresponds to the number of carbon atoms), which features a carbon-carbon double bond at the first carbon atom (a-carbon). Examples of α-olefins include ethylene, propylene, 1-butene, 2-methyl-1-propene (isobutylene), 1-pentene, 1-hexene, 1-heptene and 1-octene. For example, neither 1,3-butadiene, nor 2-butene, nor styrene are referred as "a-olefins" according to the present disclosure.

The term "poly-α-olefin" designates homopolymers and copolymers obtained by polymerization or oligomerization of α-olefins or multiple distinct α-olefins.

The term "molecular weight" refers to the molar mass (g/mol) of a molecule or a part of a molecule, also referred to as "moiety". The term "average molecular weight" refers to number average molecular weight (Mₙ) of an oligomeric or polymeric mixture of molecules or moieties. The molecular weight may be determined by gel permeation chromatography.

The term "glass transition temperature" (T_{g}) refers to the temperature above which temperature a polymer component becomes soft and pliable, and below which it becomes hard and glassy. The glass transition temperature can be determined by differential scanning calorimetry (DSC) measurement conducted according to ISO 11357 standard. The measurements can be performed with a Mettler Toledo 822e device at a heating rate of 2 degrees centigrade /min. The glass transition temperature values can be determined from the measured DSC curve with the help of the DSC software.

The term "softening point" refers to a temperature at which compound softens in a rubber-like state, or a temperature at which the crystalline portion within the compound melts. The softening point can be determined by ring and ball measurement conducted according to DIN EN 1238 standard.

The term "melting temperature" refers to a crystalline melting point (Tₘ) as determined by differential scanning calorimetry (DSC).

The term "crosslinked" refers to a polymer matrix, in which the polymer chains are inter-connected by a plurality of covalent bonds that are stable mechanically and thermally. Other possible forms of crosslinked polymers such as physically crosslinked polymers are not regarded as "crosslinked" in the context of the present disclosure. The terms "cured" and "vulcanized" may be used interchangeably with the term "crosslinked".

The term "crosslinking degree" refers to a proportion of the component, which is insoluble in boiling xylene. The percentage of insoluble proportion can be determined by refluxing a test specimen in boiling xylene, weighting the dried residue and making suitable corrections for other soluble and insoluble components present in the tested composition. Preferably, the crosslinking degree is measured by using a method as defined ISO 10147 standard.

The "amount or content of at least one component X" in a composition, for example "the amount of the at least one polymer P" refers to the sum of the individual amounts of all polymers P contained in the composition. For example, in case the composition comprises 20 wt.-% of at least one polymer P, the sum of the amounts of all polymers P contained in the composition equals 20 wt.-%.

The term "normal room temperature" refers to the temperature of 23 °C.

The waterproofing membrane and the protective film are preferably planar elements having first and second major surfaces, i.e. top and bottom surfaces, defined by peripheral edges. The term "planar element" refers in the present disclosure to sheet-like elements having a length and width at least 25 times, preferably at least 50 times, more preferably at least 150 times greater than the thickness of the element. The waterproofing membrane can be a single- or multi-layer membrane. In case of a multi-layer membrane, the term "bottom surface" refers to the outer surface of the layer facing the surface of the backing layer.

The backing layer is directly attached over at least part of its surface to the bottom surface of the waterproofing membrane through thermal bonding. The expression "directly attached" is understood to mean in the context of the present invention that no further layer or substance is present between the layers, and that the opposing surfaces of the two layers are directly connected, in particular bonded to each other. At the transition area between the two layers, the materials forming the layers can also be present mixed with each other.

It may be preferable that the backing layer is directly attached over its substantially entire surface to the bottom surface of the waterproofing membrane through thermal bonding. For example, it may be preferable that at least 90 %, more preferably at least 95 %, most preferably at least 97.5 % of the surface of the backing layer is directly attached to the bottom surface of the waterproofing membrane. It may furthermore be preferable that the backing layer and the waterproofing membrane have substantially same width and length and that the backing layer covers the entire bottom surface of the waterproofing membrane.

The composition of the waterproofing layer is not particularly restricted but it should be as waterproof as possible and not to decompose or be mechanically damaged even under prolonged influence of water or moisture. The at least one polymer P1 is preferably a thermoplastic polymer. The at least one polymer P1 is preferably selected from the group consisting of ethylene - vinyl acetate copolymer (EVA), ethylene - acrylic ester copolymers, ethylene - α-olefin copolymers, ethylene - propylene copolymers, propylene - α-olefin copolymers, propylene - ethylene copolymers, polypropylene (PP), polyethylene (PE), polyvinylchloride (PVC), polyethylene terephthalate (PET), polystyrene (PS), polyamides (PA), chlorosulfonated polyethylene (CSPE), ethylene propylene diene rubber (EPDM), and polyisobutylene (PIB).

According to one or more embodiments, the at least one thermoplastic polymer P1 is selected from the group consisting of polypropylene (PP), propylene - α-olefin co-polymers, propylene - ethylene copolymers, low-density polyethylene, linear low-density polyethylene, high-density polyethylene, ethylene - vinyl acetate copolymer (EVA), ethylene - acrylic ester copolymers, ethylene - α-olefin co-polymers, and ethylene - propylene copolymers. According to one or more further embodiments, the at least one thermoplastic polymer P1 is selected from the group consisting of polypropylene (PP), propylene - α-olefin co-polymers, and propylene - ethylene copolymers.

Suitable thermoplastic polymers P1 can have a melting point, for example, in the range of 25 - 250°C, preferably 55 - 225°C, more preferably 60 - 200 °C, most preferably 65 - 150°C. The term "melting point" refers in the present document to the maximum of the curve determined according to ISO 11357 standard by means of dynamic differential calorimetry (DSC). At the melting point the material undergoes transition from the solid to the liquid state. The measurements can be performed with a Mettler Toledo 822e device at a heating rate of 2 degrees centigrade/min and the melting point values can be determined from the measured DSC curve with the help of the DSC software.

The glass transition temperature (T_{g}) of the at least one thermoplastic polymer P1 is preferably below the temperatures occurring during the use of the sealing device. It may therefore be advantageous that the T_{g} of the at least one thermoplastic polymer P2 is below 0°C, more preferably below -15°C, most preferably below -30°C. The term "glass transition temperature" refers in the present document to the temperature measured by DSC according to ISO 11357 standard above which temperature a polymer component becomes soft and pliable, and below which it becomes hard and glassy. The measurements can be performed with a Mettler Toledo 822e device at a heating rate of 2 degrees centigrade /min and the T_{g} values can be determined from the measured DSC curve with the help of the DSC software.

The amount of the at least one polymer P1 in the waterproofing membrane is not particularly restricted. Preferably, the at least one polymer P1 is present in the waterproofing membrane in an amount of at least 15 wt.-%, more preferably at least 35 wt.-%, most preferably at least 50 wt.-%, based on the total weight of the waterproofing membrane. According to one or more embodiments, the at least one polymer P1 is present in the waterproofing membrane in an amount of 15 - 95 wt.-%, preferably 30 - 90 wt.-%, most preferably 35 - 85 wt.-%, based on the total weight of the waterproofing membrane.

The waterproofing membrane may further comprise auxiliary components, for example, UV- and heat stabilizers, antioxidants, plasticizers, flame retardants, fillers, dyes, pigments such as titanium dioxide and carbon black, matting agents, antistatic agents, impact modifiers, biocides, and processing aids such as lubricants, slip agents, antiblock agents, and denest aids. The total amount of the auxiliary components is preferably not more than 30 wt.-%, more preferably not more than 20 wt.-%, most preferably not more than 15 wt.-%, based on the total weight of the waterproofing membrane.

The detailed composition of the backing layer is not particularly restricted. Preferably, the at least one polymer P2 is a thermoplastic polymer. It is also preferred that the at least one polymer P2 is miscible with the at least one polymer P1 contained in the waterproofing membrane. More preferably, the at least one polymer P2 is weldable with the at least one polymer P1. The polymers being "weldable" with each other means here that a thermoplastic layer composed of the at least one polymer P1 can be homogenously joined by heat welding with another thermoplastic layer composed of the at least one polymer P2.

It is also preferred that the backing layer has a melting point, which is below the melting point of the waterproofing membrane. It may be preferable that the backing layer has a melting point, which is at least 5 °C below, more preferably at least 10 °C below, even more preferably at least 15 °C below, most preferably at least 20 °C below the melting point of the waterproofing membrane. In case the protective film comprises two or more backing layers, the backing layer that is directly connected to the bottom surface of the waterproofing membrane preferably has a melting point, which is below the melting point of the waterproofing membrane. Furthermore, It may be preferable that the backing layer has a melting point, which is at least 5 °C below, more preferably at least 10 °C below, even more preferably at least 15 °C below, most preferably at least 20 °C below the melting point of the waterproofing membrane.

The amount of the at least one polymer P2 in the backing layer is not particularly restricted. Preferably, the at least one polymer P2 is present in the backing layer in an amount of at least 50 wt.-%, more preferably at least 70 wt.-%, most preferably at least 90 wt.-%, based on the total weight of the backing layer. According to one or more embodiments, the at least one polymer P2 is present in the backing layer in an amount of 50 - 97.5 wt.-%, preferably 55 - 95 wt.-%, more preferably 60 - 90 wt.-%, most preferably 65 - 95 wt.-%, based on the total weight of the backing layer.

According to one or more embodiments, the at least one polymer P2 is selected from propylene homopolymers and propylene copolymers.

Suitable propylene homopolymers to be used in the backing layer have melting temperature determined by using the method as defined in ISO 11357-3 standard in the range of 90 - 190 °C, preferably 100 - 170 °C, more preferably 120 - 160 °C and/or a melt flow index (MFI) (230 °C/2.16 kg) determined by using the method as defined in ISO 1133 standard in the range of 0.5 - 60 g/10 min, preferably 1.0 - 35 g/10 min, more preferably 1.0 - 20 g/10 min. Suitable propylene homopolymers are commercially available, for example, from Lyondell Basell under the trade names of Hostalen® and Moplen®.

Suitable propylene copolymers include propylene-based olefin copolymers, for example, propylene-α-olefin random and block copolymers of propylene and one or more C₄-C₂₀ α-olefin monomers, in particular one or more of 1-butene, 1-pentene, 1-hexene, 1- heptene, 1-octene, 1-decene, 1-dodecene, and 1-hexadodecene. These types of propylene- α-olefin copolymers are also characterized as "plastomers" or "propylene-based elastomers".

Suitable propylene copolymers to be used in the backing layer have a softening point determined by Ring and Ball measurement conducted according to DIN EN 1238 standard in the range of 50 - 180 °C, preferably 60 - 170 °C, more preferably 70 - 160 °C and/or a melt flow index (MFI) (230 °C/2.16 kg) determined by using the method as defined in ISO 1133 standard in the range of 1.0 - 50 g/10 min, preferably 1.0 - 35 g/10 min, more preferably 1.0 - 20 g/10 min). Suitable propylene-based copolymers are commercially available, for example, from Dow Chemical Company under the trade name of Versify@ and from Exxon Mobil under the trade name of Vistamaxx®.

The backing layer may further comprise auxiliary components, for example, UV- and heat stabilizers, antioxidants, plasticizers, flame retardants, fillers, dyes, pigments such as titanium dioxide and carbon black, matting agents, antistatic agents, impact modifiers, biocides, and processing aids such as lubricants, slip agents, antiblock agents, and denest aids. The total amount of the auxiliary components is preferably not more than 30 wt.-%, more preferably not more than 25 wt.-%, most preferably not more than 15 wt.-%, based on the total weight of the backing layer.

The preferred thickness of the backing layer depends on the embodiment of the sealing device, in particular if the protective film has a single- or multi-layer structure. Preferably, that the backing layer has a thickness of at least 2.5 µm, in particular at least 5 µm. The thickness of the backing layer can be determined by using the method as defined in DIN EN 1849-2 standard. According to one or more embodiments, the backing layer has a thickness in the range of 2.5 - 500 µm, preferably 2.5 - 250 µm, more preferably 5 - 150 µm, most preferably 10 - 100 µm. According to one or more further embodiments, the backing layer has a thickness in the range of 2.5 - 100 µm, preferably 5 - 75 µm, more preferably 10 - 50 µm, most preferably 15 - 35 µm.

The backing layer is preferably a blown film or a cast film. In case the protective film is a multilayer film, it can be prepared by adhesive lamination or by co-extrusion, for example.

Preferably, the backing layer has a flexural modulus determined by using the method as defined in ISO 178:2010 standard at a temperature of 23 °C in the range of 10 - 2500 MPa, more preferably 250 - 2000 MPa, most preferably 500 - 1500 MPa.

One of the advantages of the sealing device of the present invention is that the backing layer exhibits very low blocking behavior, which enables storing of the sealing devices in form of stacked sheets or in rolls even at temperatures above the normal room temperature. Preferably, the backing layer has a blocking value, determined by means of the method cited in the description at a temperature of 23 °C, of not more than 15.0 N/15 mm, more preferably not more than 10.0 N/15 mm, even more preferably not more than 7.5 N/15 mm, most preferably not more than 5.0 N/15 mm. It may be advantageous that the backing layer has a blocking value, determined by means of the method cited in the description at a temperature of 23 °C, of not more than 3.5 N/15 mm more preferably not more than 2.5 N/15 mm, even more preferably not more than 1.5 N/15 mm, most preferably not more than 0.5 N/15 mm.

In the context of the present disclosure, the "blocking value" of a layer refers to the peeling force, which is required to separate two identical layers from each other and which is determined by using the measurement method as described below.

### Measurement of the blocking value

The blocking value of a layer is determined based on the measurement method as defined in DIN 53366 standard. The measurement is conducted at a temperature of 23 °C using a peeling mode instead of a shearing mode, i.e. the layers are separated from each other by using a peeling force. The blocking value is determined as force in N/15 mm width of layer required to separate the two layers from each other after the layers have been pressed together for a period of 72 hours at a temperature of 50 °C using a pressure of 0.5 kg/cm2.

The sealing device may further comprise a reinforcement layer in order to improve the dimensional stability of the sealing device. The reinforcement layer is preferably at least partially embedded, preferably fully embedded into the waterproofing layer. The type of the reinforcing layer is not particularly restricted. For example, the reinforcing layers commonly used for improving the dimensional stability of thermoplastic waterproofing and roofing membranes can be used. Preferably, the reinforcing layer comprises at least one layer of fiber material.

The term "fiber material" designates in the present disclosure materials composed of fibers. Suitable fibers to be used in the support sheet can comprise or consist of organic, inorganic or synthetic organic materials or any combination thereof. Suitable organic fibers include, for example, cellulose fibers, cotton fibers, and protein fibers. Suitable synthetic organic fibers include, for example, fibers composed of polyester, homopolymers and copolymers of ethylene and/or propylene, viscose, nylon, and polyamides. Fiber materials composed of inorganic fibers are also suitable, in particular, those composed of mineral fibers, such as glass fibers, aramid fibers, wollastonite fibers, and carbon fibers. Inorganic fibers, which have been surface treated, for example, with silanes, may also be used. The fiber material can comprise short fibers, long fibers, spun fibers (yarns), or filaments. The fibers can moreover be aligned or drawn fibers. It may also be advantageous to use a combination of different types of fibers, both in terms of geometry and composition.

The fiber material is preferably selected from the group consisting of non-woven fabrics, woven fabrics, and non-woven scrims.

The term "non-woven fabric" designates in the present disclosure materials composed of fibers, which are bonded together by using chemical, mechanical, or thermal bonding means, and which are neither woven nor knitted. Non-woven fabrics can be produced, for example, by using a carding or needle punching process, in which the fibers are mechanically entangled to obtain the nonwoven fabric. In chemical bonding, chemical binders such as adhesive materials are used to hold the fibers together in a nonwoven fabric.

The term "non-woven scrim" designates in the present disclosure web-like non-woven products composed of yarns, which lay on top of each other and are chemically bonded to each other. Typical materials for non-woven scrims include metals, fiberglass, and plastics, in particular polyester, polypropylene, polyethylene, and polyethylene terephthalate (PET).

Figure 1 shows a cross-section of a sealing device (1) comprising a waterproofing membrane (2) and a protective film (3) comprising a backing layer (4), which is directly attached over at least part of its surface to the bottom surface of the waterproofing membrane.

According to one or more embodiments, the protective film further comprises a second backing layer and a barrier layer located between the backing layers, wherein the barrier layer is directly or indirectly attached to the outer surface of the backing layer facing away from the bottom surface of the waterproofing membrane.

Figure 2 shows a cross section of a sealing device (1) according to one embodiment of the present invention, wherein the protective film (3) comprises a backing layer (4), which is directly attached to the bottom surface of the waterproofing membrane (2), a second backing layer (6), and a barrier layer (5), which is located between the backing layers. The barrier layer (5) is directly or indirectly attached to the outer surface of the backing layer (4) facing away from the bottom surface of the waterproofing membrane (2).

Preferably, the second backing layer comprises at least one polymer P3 selected from propylene homopolymers and propylene copolymers. Suitable propylene homopolymers and propylene copolymers include the ones described above in connection with the at least one polymer P2. According to one or more embodiments, the at least one polymer P3 is identical to the at least one polymer P2.

Preferably, the at least one polymer P3 is present in the second backing layer in an amount of at least 50 wt.-%, more preferably at least 70 wt.-%, most preferably at least 90 wt.-%, based on the total weight of the second backing layer. According to one or more embodiments, the at least one polymer P3 is present in the second backing layer in an amount of 50 - 97.5 wt.-%, preferably 55 - 95 wt.-%, more preferably 60 - 90 wt.-%, most preferably 65 - 95 wt.-%, based on the total weight of the second backing layer.

Preferably, the barrier layer comprises at least 70 wt.-%, preferably at least 85 wt.-%, based on the total weight of the barrier layer, of at least one polymer P4 selected from the group consisting of polyamide (PA), polyethylene terepthalate (PET), ethylene vinyl alcohol (EVOH), polyvinyldiene chloride (PVDC), and polyethylene. According to one or more embodiments, the at least one polymer P4 is present in the barrier layer in an amount of 50 - 97.5 wt.-%, preferably 55 - 95 wt.-%, more preferably 60 - 90 wt.-%, most preferably 65 - 95 wt.-%, based on the total weight of the barrier layer.

According to one or more embodiments, the protective film further comprises a third backing layer and a second barrier layer located between the second and third backing layers, wherein the second barrier layer is directly or indirectly connected to the outer surface of the second backing layer facing away from the bottom surface of the waterproofing membrane.

Figure 3 shows a cross section of a sealing device (1) according to one embodiment of the present invention, wherein the protective film (3) comprises a backing layer (4), which is directly attached to the bottom surface of the waterproofing membrane (2), a second backing layer (6), and a first barrier layer (5), which is located between the first and second backing layers (4, 6) as well as a third backing layer (8) and a second barrier layer (7), which is located between the second and third backing layers (6, 8). The second barrier layer (7) is directly or indirectly connected to the outer surface of the second backing layer (6) facing away from the bottom surface of the waterproofing membrane (2).

Preferably, the third backing layer comprises at least one polymer P5 selected from propylene homopolymers and propylene copolymers. According to one or more embodiments, the at least one polymer P5 is identical to the at least one polymer P3.

Preferably, the at least one polymer P5 is present in the third backing layer in an amount of at least 50 wt.-%, more preferably at least 70 wt.-%, most preferably at least 90 wt.-%, based on the total weight of the third backing layer. According to one or more embodiments, the at least one polymer P3 is present in the third backing layer in an amount of 50 - 97.5 wt.-%, preferably 55 - 95 wt.-%, more preferably 60 - 90 wt.-%, most preferably 65 - 95 wt.-%, based on the total weight of the third backing layer.

Preferably, the second barrier layer comprises at least 70 wt.-%, preferably at least 85 wt.-%, based on the total weight of the barrier layer, of at least one polymer P6 selected from the group consisting of polyamide (PA), polyethylene terepthalate (PET), ethylene vinyl alcohol (EVOH), polyvinyldiene chloride (PVDC), and polyethylene. According to one or more embodiments, the at least one polymer P6 is present in the second barrier layer in an amount of 50 - 97.5 wt.-%, preferably 55 - 95 wt.-%, more preferably 60 - 90 wt.-%, most preferably 65 - 95 wt.-%, based on the total weight of the second barrier layer.

It may be preferable that the second and third backing layers have a thickness of at least 2.5 µm, in particular at least 5 µm. The thickness of the backing layer(s) can be determined by using the method as defined in DIN EN 1849-2 standard. According to one or more embodiments, the second and third backing layers have a thickness in the range of 2.5 - 500 µm, preferably 2.5 - 250 µm, more preferably 5 - 150 µm, most preferably 10 - 100 µm. According to one or more further embodiments, the second and third backing layers have a thickness in the range of 2.5 - 100 µm, preferably 5 - 75 µm, more preferably 10 - 50 µm, most preferably 15 - 35 µm.

It may be preferable that the second and third backing layers have a flexural modulus determined by using the method as defined in ISO 178:2010 standard at a temperature of 23 °C in the range of 10 - 2500 MPa, more preferably 250 - 2000 MPa, most preferably 500 - 1500 MPa.

It may be preferable that the barrier layer and the second barrier layer have a thickness of at least 5 µm, in particular at least 10 µm. According to one or more embodiments, the barrier layer(s) have a thickness in the range of 2.5 - 500 µm, preferably 2.5 - 250 µm, more preferably 5 - 150 µm, most preferably 10 - 100 µm. According to one or more further embodiments, the barrier layer and the second barrier layer have a thickness in the range of 2.5 - 100 µm, preferably 5 - 75 µm, more preferably 10 - 50 µm, most preferably 15 - 35 µm.

Preferably, the barrier layer and the second barrier layer have a flexural modulus determined by using the method as defined in ISO 178:2010 standard at a temperature of 23 °C in the range of 10 - 2500 MPa, more preferably 250 - 2000 MPa, most preferably 500 - 1500 MPa.

According to one or more embodiments, the waterproofing membrane is composed of a composition comprising:
a') At least one thermoplastic elastomer and
b') At least one elastomer.

Thermoplastic elastomers (TPE) is a group of polymeric materials, which exhibit rubber elasticity over a specified temperature range but which at elevated temperatures can be processed as a thermoplastic. They include a class of copolymers and blends of thermoplastic and elastomer polymer components. A typical thermoplastic elastomer is a blend of a thermoplastic polymer and an elastomer component. The components of the thermoplastic elastomer can be formed as a reactor blend, in which case the thermoplastic polymer and the elastomer are simultaneously produced in a single reactor vessel using different catalysts, or as a physical blend, wherein the components are separately produced and subsequently melt-blended using high-shear mixing technique. Thermoplastic elastomers can also be provided as a single polymer component material composed of semi-crystalline random or block copolymers containing phase separated hard (crystalline) and soft (amorphous) segments.

Commercially available thermoplastic elastomers include, for example, thermoplastic polyolefins (TPO), styrenic block copolymers (TPS), thermoplastic vulcanizates, (TPV), thermoplastic polyurethanes (TPU), thermoplastic copolyesters (TPC), and thermoplastic polyamides (TPA).

Preferably, the at least one thermoplastic elastomer is a thermoplastic polyolefin (TPO) or ethylene vinyl acetate copolymer (EVA).

Thermoplastic polyolefins are thermoplastic elastomers, which are based solely on olefinic components. These are also known as "thermoplastic olefins" or "olefinic thermoplastic elastomers" (TPE-O). Commercially available thermoplastic polyolefins include reactor blends, physical blends and single polymer component materials, in particular those composed of random and block copolymers of olefin monomers. A blend-type TPO typically comprises at least one polyolefin, such as polypropylene or polyethylene as the thermoplastic component and at least one olefin copolymer elastomer (OCE), such as ethylene propylene rubber (EPR) or ethylene propylene diene monomer (EPDM), as the elastomer component.

Reactor blend-type thermoplastic elastomers also include commercial products, which are characterized as heterophasic copolymers or heterophasic random copolymers and impact copolymers (ICP). Heterophasic random copolymers are typically reactor blends of propylene random copolymer and ethylene propylene rubber (EPR). Typical impact copolymers comprise a semicrystalline homopolymer matrix, such as polypropylene matrix, and an elastomer phase, such as ethylene or propylene copolymer phase, which is dispersed within the homopolymer matrix. The amount of the elastomer component in impact copolymers is usually significantly lower than the amount of the homopolymer matrix, such as not more than 30 wt.-%, in particular not more than 20 wt.-%. Impact copolymer type of products containing higher amounts of the elastomeric phase are typically characterized as soft "TPOs" or "reactor TPOs".

Suitable reactor blend-type TPOs to be used as the at least one thermoplastic elastomer are commercially available, for example, from Lyondell Basell, under the trade name of Hifax®, such as Hifax® CA 10A, Hifax® CA 12A, and Hifax® CA 212 A, under the trade names of Adflex® and Adsyl®. Further suitable reactor blend-type TPOs characterized as heterophasic random propylene copolymers are commercially available, for example, from Borealis Polymers under the trade name of Borsoft®, such as Borsoft® SD233CF,
Suitable single polymer component TPOs to be used as the at least one thermoplastic elastomer include random and block copolymers of olefinic monomers containing phase separated hard (crystalline) and soft (amorphous) segments. These types of TPOs include, for example, ethylene- α-olefin copolymers and propylene- α-olefin copolymers. Propylene- α-olefin copolymers are usually characterized as plastomers or elastomers whereas the ethylene- α-olefin copolymers are typically referred to as polyolefin plastomers (POP) or polyolefin elastomers (POE). The basic difference between plastomers and polyolefin elastomers (POE) is that plastomers tend to have somewhat less elastic properties than polyolefin elastomers.

Suitable polyolefin plastomers (POP) based on ethylene-α-olefin copolymers to be used as the at least one thermoplastic elastomer are commercially available, for example, from Dow Chemicals under the trade name of Affinity®, such as such as Affinity® EG 8100G, Affinity® EG 8200G, Affinity® SL 8110G, Affinity® KC 8852G, Affinity@ VP 8770G, and Affinity® PF 1140G, and from Exxon Mobil under the trade name of Exact®, such as Exact® 3024, Exact® 3027, Exact® 3128, Exact® 3131, Exact® 4049, Exact® 4053, Exact® 5371, and Exact® 8203.

Suitable polyolefin elastomers (POE) based on ethylene-α-olefin random copolymers to be used as the at least one thermoplastic elastomer are commercially available, for example, from Dow Chemicals under the trade name of Engage®, such as Engage® 7256, Engage® 7467, Engage® 7447, Engage® 8003, Engage® 8100, Engage® 8480, Engage® 8540, Engage® 8440, Engage® 8450, Engage® 8452, Engage® 8200, and Engage® 8414
Suitable olefin block copolymers (OBC) based on ethylene- α -olefin block copolymers to be used as the at least one thermoplastic elastomer are commercially available, for example, from Dow Chemicals under the trade name of Infuse®, Infuse® 9100, Infuse® 9107, Infuse® 9500, Infuse® 9507, and Infuse® 9530.

Suitable plastomers based on propylene-ethylene copolymers to be used as the at least one thermoplastic elastomer are commercially available, for example, from Dow Chemicals under the trade name of Versify®, such as Versify® 2200, Versify® 3000, Versify® 3200, and Versify® 4200.

Suitable elastomers based on propylene- ethylene copolymers to be used as the at least one thermoplastic elastomer are commercially available, for example, from Dow Chemicals under the trade name of Versify®, such as Versify® 2300, Versify® 340, and Versify® 4301, and from Exxon Mobil under the trade name of Vistamaxx®, such as Vistamaxx® 6102, Vistamaxx® 6202, and Vistamaxx® 3000.

The preferred amount the at least one thermoplastic elastomer and the at least one elastomer depends on the intended application of the sealing device. It may be preferable that the at least one thermoplastic elastomer is present in the composition in an amount of at least 15 wt.-%, more preferably at least 25 wt.-%, most preferably at least 35 wt.-%, based on the total weight of the composition. In particular, the at least one thermoplastic elastomer may present in the composition in an amount of 25 - 95 wt.-%, preferably 30 - 90 wt.-%, more preferably 35 - 85 wt.-%, even more preferably 40 - 80 wt.-%, most preferably 45 - 75 wt.-%, based on the total weight of the composition.

The amount of the at least one elastomer contained in the composition is not particularly restricted. Increasing the proportion of the elastomer improves the flexibility of waterproofing membrane. This may be advantageous especially in roofing applications, for example, for waterproofing of roof structures. It may be preferable that at least one elastomer is present in the composition in an amount of at least 10 wt.-%, more preferably at least 20 wt.-%, most preferable at least 30 wt.-%, based on the total weight of the composition. In particular, the at least one elastomer may present in the composition in an amount of 5 - 65 wt.-%, preferably 10 - 50 wt.-%, more preferably 15 - 45 wt.-%, even more preferably 15 - 40 wt.-%, most preferably 15 - 35 wt.-%, based on the total weight of the composition.

According to one or more embodiments, the at least one thermoplastic elastomer and the at least one elastomer are present in the composition as co-continuous phases. The expression "co-continuous" is understood to mean that the distinction between disperse and continuous polymer phases in the composition becomes difficult, as each phase becomes continuous in space. There may also be regions where the first phase appears to be dispersed within the second, and vice versa. Furthermore, each polymer is in the form of a continuous structure, wherein the structures of each polymer are intertwined with one another to form a co-continuous macrostructure.

Preferably, the at least one thermoplastic elastomer and the at least one elastomer are compatible. By the polymers components being "compatible" is understood to mean that the properties of a blend composed of the at least one thermoplastic elastomer and the at least one elastomer are not inferior to those of the individual polymer components. It may also be preferable that the at least one thermoplastic elastomer and the at least one elastomer are partially miscible but not necessarily entirely miscible with each other. By the polymer components being "miscible" is understood to mean that a polymer blend composed of the at least one thermoplastic elastomer and the at least one elastomer has a negative Gibbs free energy and heat of mixing. The polymer blends composed of entirely miscible polymer components tend to have one single glass transition point, which can be measured using dynamic mechanical thermal analysis (DMTA). The glass transition point can be determined, for example, as the peak of the measured tan delta curve (ratio of storage and loss moduli).

It may be preferable that the at least one elastomer contained in the composition has a crosslinking degree, measured by using the method as defined in ISO 10147 standard, of not more than 10.0 wt.-%, more preferably not more than 5 wt.-%, even more preferably not more than 2.5 wt.-%, most preferably not more than 1.5 wt.-%. It may also be preferable that the at least one elastomer is a non-crosslinked elastomer.

The at least one elastomer is preferably selected from the group consisting of butyl rubber, halogenated butyl rubber, ethylene-propylene diene rubber (EPDM), natural rubber, chloroprene rubber, synthetic 1,4-cis-polyisoprene, polybutadiene, ethylene-propylene rubber, styrene-butadiene copolymer, isoprene-butadiene copolymer, styrene-isoprene-butadiene rubber, methyl methacrylate-butadiene copolymer, methyl methacrylate-isoprene copolymer, acrylonitrile-isoprene copolymer, and acrylonitrile-butadiene copolymer.

Preferred elastomers include isobutylene-based homopolymers and copolymers. These polymers can be described as random copolymer of a C₄ to C₇ isomonoolefin derived unit, such as isobutylene derived unit, and at least one other polymerizable unit.

It may be preferable that the at least one elastomer has a low degree of unsaturation. The term "degree of unsaturation" refers in the present document to the ratio of the number of unsaturated carbon-to-carbon bonds to the number of atoms in the linear chain of the average theoretical linear elastomer molecule. The low degree of unsaturation is preferred, for example, in roofing applications, in which the waterproofing membranes have to be able to withstand permanent exposure to various environmental factors, in particular UV-radiation. Preferably, the at least one elastomer has a mole percent unsaturation of not more than 5.0, more preferably not more than 2.5, even more preferably not more than 1.5, most preferably not more than 0.5.

The at least one elastomer is preferably selected from the group consisting of butyl rubber and halogenated butyl rubber, preferably halogenated butyl rubber. The term "halogenated rubber" refers in the present documents to a rubber having a halogen content of at least 0.1 mol.-percent, wherein the halogen is preferably selected from the group consisting of bromine, chlorine and iodine. Preferred halogenated butyl rubbers have a halogen content of not more than 10 wt.-%, more preferably not more than 7.5 wt.-%, most preferably not more than 5.0 wt.-%, based on the total weight of the butyl rubber.

According to one or more embodiment, the at least one elastomer is a halogenated butyl rubber, preferably a bromobutyl rubber or a chlorobutyl rubber, having a halogen content in the range of 0.1 - 10 wt.-%, more preferably 0.5 - 8 wt.-%, most preferably 0.5 - 5.0 wt.-%, based on the total weight of the butyl rubber. According to one or more further embodiments, the at least one elastomer is a halogenated butyl rubber, preferably a bromobutyl rubber or a chlorobutyl rubber, having a halogen content in the range of 0.1 - 5.0 wt.-%, preferably 0.1 - 3.5 wt.-%, more preferably 0.1 - 2.5 wt.-%, most preferably 0.1 - 1.5 wt.-%.

It may be preferable that the waterproofing membrane has an elastic modulus, measured by using the method as defined in ISO 527-2 standard at a temperature of 23 °C, of not more than 50 N/mm2, preferably not more than 25 N/mm2, most preferably not more than 15 N/mm2.

The composition may further comprise at least one hindered amine light stabilizer (HALS). These compounds are typically added to polymer blends as stabilizers against light-induced polymer degradation. Such stabilizers are needed, in particular, in case the sealing device is used in outdoor applications, for example, for waterproofing of roof structures.

According to one or more embodiments, the composition further comprises 0.1 - 10.0 % by weight, preferably 0.1 - 5.0 % by weight, based on the total weight of the composition, of at least one hindered amine light stabilizer (HALS).

Suitable commercially available hindered amine light stabilizers include, in particular, alkoxyamine hindered amine light stabilizers (NOR-HALS), such as:
bis-(1-octyloxy-2,2,6,6-tetramethyl-4-piperidinyl) sebacate, commercially available, for example, as Tinuvin® NOR 123 (from Ciba Chemicals, CAS number 129757-67-1); derivatives of N-butyl-2,2,6,6-tetramethyl-4-piperidinamine, commercially available, for example, as Tinuvin® NOR 152 (from Ciba Chemicals); reaction products with 3-bromo-1-propene, n-butyl-1-butanamine and N-butyl-2,2,6,6-tetramethyl-4-piperidinamine, oxidised, hydrogenated, commercially available, for example, as Tinuvin NOR® 371 (from Ciba Chemicals); reaction products of N,N'-ethane-1,2-diylbis(1,3-propanediamine), cyclohexane, peroxidized 4-butylamino-2,2,6,6-tetramethylpiperidine and 2,4,6-trichloro-1,3,5-triazine, commercially available as Flamestab NOR 116 (from BASF) ; and Hostavin NOW ex (from Clariant).

The composition may further comprise at least one flame retardant. These are needed, in particular, in case the sealing device is used in roofing applications, for example, for waterproofing of roof structures. According to one or more embodiments, the composition comprises 1 - 50 % by weight, preferably 5 - 40 % by weight, based on the total weight of the composition, of at least one flame retardant selected from the group consisting of magnesium hydroxide, aluminum trihydroxide, and antimony trioxide.

Suitable flame retardants are commercially available, for example, under the trade name of Martinal® and Magnifin® (both from Albemarle).

The composition may further comprise at least one UV-absorber selected the group consisting of hydroxybenzophenones, hydroxybenzotriazoles, triazines, anilides, benzoates, cyanoacrylates, phenylformamidines, and mixtures thereof. According to one or more embodiments, the composition comprises 0.1 - 10.0 % by weight, preferably 0.5 - 5.0 % by weight, based on the total weight of the composition, of at least one UV-absorber.

Suitable UV-absorbers are commercially available, for example, under the trade name of Tinuvin® (from Ciba Specialty Chemicals), such as Tinuvin ® 213, 234, 320, 326-329, 350, 360, 571.

The composition may further comprise auxiliary components such as thermal stabilizers, antioxidants, plasticizers, flame retardants, fillers, dyes, pigments such as titanium dioxide and carbon black, matting agents, antistatic agents, impact modifiers, biocides, and processing aids such as lubricants, slip agents, antiblock agents, and denest aids. The total amount of the auxiliary components is preferably not more than 25 wt.-%, more preferably not more than 15 wt.-%, most preferably not more than 10 wt.-%, based on the total weight of the composition.

The composition as defined above may be obtained by melt-processing a starting blend comprising the at least one thermoplastic elastomer and the at least one elastomer. The term "melt processing" refers in the present disclosure to a process, in which at least one molten polymeric component is intimately mixed with at least one other component, which may be another molten polymeric component or a solid component, such as a filler or a catalyst. The melt-processed starting blend may be used as such or further processed to a shaped article by using any conventional technique known to a skilled person, for example, extrusion, molding, or calendaring technique. Preferably, the composition is obtained by melt-processing a starting blend comprising the at least one thermoplastic elastomer and the at least one elastomer and extruding the melt-processed starting blend through an extruder die.

The melt-processing is preferably conducted at a temperature, which is above the melting point of the at least one thermoplastic elastomer, or in case the starting blend comprises more than one thermoplastic elastomers, at a temperature, which is above the melting point of the thermoplastic elastomer having the highest melting point. The melt processing can be conducted as a batch process using any conventional mixer, such as a Brabender, Banbury, or roll mixer or as continuous process using a continuous type mixer, preferably an extrusion apparatus comprising an extruder, preferably a single screw or a twin screw extruder.

It may be preferable that the starting blend comprises, in addition to the at least one thermoplastic elastomer and the at least one elastomer, at least one catalyst. The at least one catalyst may be present in the starting blend to catalyze chain extension and/or crosslinking and/or coupling reactions of the polymer components, in particular of the at least one elastomer, during and/or after the melt-processing step.

The at least one catalyst is preferably selected from the group consisting of metal oxides, sulfur, phenol resin catalysts, fatty acids, and mixtures thereof Suitable metal oxide catalysts include, for example, ZnO, CaO, MgO, Al₂O₃, CrO₃, FeO, Fe₂O₃, NiO, and mixtures thereof. Suitable sulfur catalysts include powdered sulfur, precipitated sulfur, high dispersion sulfur, surface-treated sulfur, insoluble sulfur, dimorpholinedisulfide, alkylphenoldisulfide, and mixtures thereof. Suitable phenol resin catalysts include bromide of an alkylphenol resin or mixed catalysts containing stannous chloride, chloroprene, or another halogen donor and an alkylphenol resin, and mixtures thereof.

The at least one catalyst, if used, is preferably present in the starting blend in an amount of not more than 10 wt.-%, more preferably not more than 7.5 wt.-%, most preferably not more than 5.0 wt.-%, based on the total weight of the starting blend. It may be preferable that the at least one catalyst is present in the starting blend in an amount of 0.1 - 7.5 % wt.-%, more preferably 0.1 - 5.0 wt.-%, even more preferably 0.1 - 2.5 wt.-%, most preferably 0.25 - 2.0 wt.-%, based on the total weight of the starting blend. It is also possible that some portion of the at least one catalyst is not consumed in the reactions of the polymer components during the melt-processing and shaping steps. It may, therefore, be advantageous that the at least catalyst is also present in the composition of the waterproofing membrane. The amount of the at least one catalyst in the composition of the waterproofing layer is preferably significantly lower than in the starting blend. It may be preferable that the composition of the waterproofing layer comprises not more than 1.5 wt.-%, more preferably not more than 1.0 wt.-%, most preferably not more than 0.5 wt.-% based on the total weight of the composition, of at least one catalyst selected from the group consisting of metal oxides, sulfur, phenol resin catalysts, fatty acids, and mixtures thereof.

The at least one catalyst may also be used in combination with at least one accelerator selected from the group consisting of guanidine compounds, aldehyde amine compounds, aldehyde ammonium compounds, thiazole compounds, sulfonamide compounds, thiourea compounds, thiuram compounds, xanthane compounds, and dithiocarbamate compounds. Such accelerators may be present in the starting blend in a total amount of 0.1 - 5.0 phr (parts by weight per 100 parts by weight of the at least one elastomer).

According to one or more embodiments, the at least one catalyst is selected from the group consisting of ZnO, CaO, MgO, Al₂O₃, CrO₃, FeO, Fe₂O₃, and NiO. According to one or more further embodiments, the at least one catalyst is ZnO or a mixture of ZnO and another metal oxide selected from the group consisting of CaO, MgO, Al₂O₃, CrO₃, FeO, Fe₂O₃, and NiO.

The starting blend and the composition of the waterproofing membrane may further comprise one or more metal salts of a fatty acid and/or one or more fatty acids. Preferably, the metal in the metal salt of a fatty acid is selected from the group consisting of Zn, Ca, Mg, Al, Cr, Fe, Fe, and Ni. Preferably, the fatty acid has at least 6 carbon atoms, more preferably at least 13 carbon atoms. Saturated fatty acids having at least 6 carbon atoms, in particular at least 13 carbon atoms have been found particularly suitable.

The preferences given above for the waterproofing membrane, the protective film, the backing layer(s), and the barrier layer(s) apply equally to all aspects of the present invention unless otherwise stated.

Another subject of the present invention is a method for producing a sealing device comprising steps of:
i) Melt-processing a thermoplastic composition comprising the constituents of a waterproofing membrane as defined above,
ii) Extruding the melt-processed composition obtained from step i) through an extruder die, and
iii) Applying the extruded shaped melt obtained from step ii) directly on one of the major surfaces of a backing layer as defined above or
   i') Providing a waterproofing membrane as defined above and
   ii') Bonding a backing layer as defined above to one of the major surfaces of the waterproofing membrane through thermal bonding.

The thermoplastic composition comprises all the constituents of the waterproofing membrane. In embodiments, wherein the waterproofing membrane is composed of a composition comprising the components a') and b'), the method for producing a sealing device comprises steps of:
i) Melt-processing a starting blend comprising the at least one thermoplastic elastomer and the at least one elastomer as defined above,
ii) Extruding the melt-processed composition obtained from step i) through an extruder die, and
iii) Applying the extruded shaped melt obtained from step ii) directly on one of the major surfaces of a backing layer as defined above.

The melt processing can be conducted as a batch process using any conventional mixer, such as a Brabender, Banbury, or roll mixer or as continuous process using a continuous type mixer, such as an extrusion apparatus comprising an extruder, preferably a single screw or a twin screw extruder. Preferably, the melt-processing step is conducted using a continuous type mixer, in particular an extrusion apparatus comprising an extruder and extruder die.

In step iii) of the method, part of the thermal energy of the extruded shaped melt is introduced on the surface of the backing layer resulting in partial melting of the backing layer, which after cooling is thermally bonded with the waterproofing membrane. The strength of the thermal bond can be increased by conducting the bonding and/or cooling under pressure. For example, the membrane composite obtained from step iii) can further be drawn through spaced apart calender cooling rolls. According to one or more embodiments, the step iii) is conducted in the polishing stack or the calender of an extruder.

The backing layer can be heated prior to, during, or after application of the shaped melt of the waterproofing membrane. Heating of the backing layer prior to the application of the shaped melt is particularly advantageous when a propylene-based water proofing membrane and propylene-based backing layer are used, because propylene homopolymers and copolymers tend to have relatively high melting points, and the heat energy introduced form the shaped melt may not be sufficient for the thermal bonding.

According to one or more embodiments, the backing layer is heated to a temperature above normal room temperature and below the melting point of the at least one polymer P2 contained the backing layer before application of the extruded shaped melt obtained on one of the major surfaces of the backing layer.

According to one or more embodiments, the method for producing a sealing device according to the present invention comprises steps of:
i') Providing a waterproofing membrane as defined above and
ii') Bonding a backing layer as defined above to one of the major surfaces of the waterproofing membrane through thermal bonding.
Bonding of the backing layer on one of the major surfaces of the waterproofing membrane can be conducted by using any conventional means, such as calendaring rolls or lamination wheels.

Step i') of the method may comprise steps of melt-processing a thermoplastic composition comprising the constituents of a waterproofing membrane or melt-processing a starting blend comprising the at least one thermoplastic elastomer and the at least one elastomer, extruding the melt-processed composition through an extruder die, and quenching the extruded web of material between calender cooling rolls.

Another subject of the present invention is a use of a protective film comprising a backing layer as defined above for reducing blocking of a waterproofing membrane, wherein the backing layer is directly attached over at least part of its surface to the bottom surface of the waterproofing membrane through thermal bonding.

The preferred embodiments of the waterproofing membrane, protective film, and the backing layer have already been described above.

It may be preferable that the backing layer is directly attached over its substantially entire surface to the bottom surface of the waterproofing membrane through thermal bonding. For example, it may be preferable that at least 90 %, more preferably at least 95 %, most preferably at least 97.5 % of the surface of the backing layer is directly attached to the bottom surface of the waterproofing membrane. It may furthermore be preferable that the backing layer and the waterproofing membrane have substantially same width and length and that the backing layer covers the entire bottom surface of the waterproofing membrane.

According to one or more embodiments, the blocking value of the waterproofing membrane, determined by means of the method cited in the description, is reduced to a value, which is at least 50 % lower, preferably at least 75 % lower, more preferably at least 85 % lower than the blocking value of the waterproofing membrane without the protective film on the bottom surface of the membrane.

According to one or more embodiments, the waterproofing membrane comprises at least 50 wt.-%, preferably at least 75 wt.-% of at least one thermoplastic polymer P1 selected from the group consisting of selected from the group consisting of ethylene - vinyl acetate copolymer (EVA), ethylene - acrylic ester copolymers, ethylene - α-olefin copolymers, ethylene - propylene copolymers, propylene - α-olefin copolymers, propylene - ethylene copolymers, polypropylene (PP), polyethylene (PE), polyvinylchloride (PVC), polyethylene terephthalate (PET), polystyrene (PS), polyamides (PA), chlorosulfonated polyethylene (CSPE), ethylene propylene diene rubber (EPDM), and polyisobutylene (PIB).

Still another subject of the present invention is method for covering a roof, the method comprising steps of:
i") Applying two or more sealing devices according to the present invention on the surface of the roof to be covered,
ii") Overlapping the adjacent edges of said sealing devices,
iii") Heating the adjacent edges of the sealing devices in the overlapping areas slightly above the melting temperature of the thermoplastic membrane and seaming the overlapped areas under sufficient pressure to provide acceptable seam strength without use of adhesive.

## Claims

1. A sealing device (1) comprising:
a) A waterproofing membrane (2) having top and bottom surfaces and comprising at least one polymer **P1** and
b) A protective film (3) comprising a backing layer (4) comprising at least one polymer **P2,** wherein the backing layer (4) is directly attached over at least part of its surface to the bottom surface of the waterproofing membrane (2) through thermal bonding and wherein the at least one polymer **P2** is present in the backing layer (4) in an amount of at least 50 wt.-%, the at least one polymer **P2** is selected from propylene homopolymers and propylene copolymers, and the backing layer (4) has a thickness of 5 - 75 µm.

2. The sealing device according to claim 1, wherein the at least one polymer **P1** is selected from the group consisting of ethylene - vinyl acetate copolymer (EVA), ethylene - acrylic ester copolymers, ethylene - α-olefin copolymers, ethylene - propylene copolymers, propylene - α-olefin copolymers polypropylene (PP), polyethylene (PE), polyvinylchloride (PVC), polyethylene terephthalate (PET), polystyrene (PS), polyamides (PA), chlorosulfonated polyethylene (CSPE), ethylene propylene diene rubber (EPDM), and polyisobutylene (PIB).

3. The sealing device according to claim 1 or 2, wherein the at least one polymer **P2** is miscible with the at least one polymer **P1,** preferably weldable with the at least one polymer **P1.**

4. The sealing device according to any of previous claims, wherein the at least one polymer **P2** is present in the backing layer (4) in an amount of at least 70 wt.-%, based on the total weight of the backing layer (4).

5. The sealing device according to any of previous claims, wherein the backing layer (4) has a flexural modulus, determined by using the method as defined in ISO 178:2010 standard at a temperature of 23 °C, in the range of 10 - 2500 MPa, preferably 250 - 2000 MPa and/or a blocking value, determined by means of the method cited in the description at a temperature of 23 °C, of not more than 2.5 N/15 mm, preferably not more than 1.0 N/15 mm.

6. The sealing device according to any of previous claims, wherein the protective film (3) further comprises a second backing layer (6) and a barrier layer (5) located between the backing layers (4, 6), wherein the barrier layer (5) is directly or indirectly attached to the outer surface of the backing layer (4) facing away from the bottom surface of the waterproofing membrane (2).

7. The sealing device according to claim 6, wherein the barrier layer (5) comprises at least 70 wt.-%, preferably at least 85 wt.-%, based on the total weight of the barrier layer (5), of at least one polymer **P4** selected from the group consisting of polyamide (PA), polyethylene terepthalate (PET), ethylene vinyl alcohol (EVOH), polyvinyldiene chloride (PVDC), and polyethylene.

8. The sealing device according to any of claims 6 or 7, wherein the protective film (3) further comprises a third backing layer (8) and a second barrier layer (7) located between the second and third backing layers (6, 8), wherein the second barrier layer (7) is directly or indirectly connected to the outer surface of the second backing layer (6) facing away from the bottom surface of the waterproofing membrane (2).

9. The sealing device according to any of previous claims, wherein the waterproofing membrane (2) is composed of a composition comprising:
a') At least one thermoplastic elastomer and
b') At least one elastomer.

10. The sealing device according to claim 9, wherein the composition comprises 25 - 95 wt.-%, preferably 30 - 90 wt.-%, of the at least one thermoplastic elastomer and/or 5 - 65 wt.-%, preferably 10 - 50 wt.-%, of the at least one elastomer, said proportions being based on the total weight of the composition.

11. The sealing device according to any of claims 9 or 10, wherein the at least one elastomer is selected from the group consisting of butyl rubbers and halogenated butyl rubbers.

12. A method for producing a sealing device comprising steps of:
i) Melt-processing a thermoplastic composition comprising the constituents of a waterproofing membrane as defined in any of claims 1-11,
ii) Extruding the melt-processed composition obtained from step i) through an extruder die, and
iii) Applying the extruded shaped melt obtained from step ii) directly on one of the major surfaces of a backing layer as defined in any of claims 1-11 or
i') Providing a waterproofing membrane as defined in any of claims 1-11 and
ii') Bonding a backing layer as defined in any of claims 1-11 to one of the major surfaces of the waterproofing membrane through thermal bonding

13. Use of a protective film comprising a backing layer as defined in any of claims 1-11 for reducing blocking of a waterproofing membrane, wherein the backing layer is directly attached over at least part of its surface to the bottom surface of the waterproofing membrane through thermal bonding.

14. The use according to claim 13, wherein the blocking value of the waterproofing membrane, determined by means of the method cited in the description, is reduced to a value, which is at least 50 % lower, preferably at least 75 % lower than the blocking value of the waterproofing membrane without the protective film on the bottom surface of the membrane.

15. A method for covering a roof comprising steps of:
i") Applying two or more sealing devices according to any of claims 1-11 on the surface of the roof to be covered,
ii") Overlapping the adjacent edges of said sealing devices,
iii") Heating the adjacent edges of the sealing devices in the overlapping areas slightly above the melting temperature of the thermoplastic membrane and seaming the overlapped areas under sufficient pressure to provide acceptable seam strength without use of adhesive.

## Patentansprüche

1. Dichtungsvorrichtung (1), die Folgendes umfasst:
a) eine wasserdichte Membran (2), die obere und untere Oberflächen aufweist und mindestens ein Polymer **P1** umfasst und
b) eine Schutzfolie (3), die eine mindestens ein Polymer **P2** umfassende Trägerschicht (4) umfasst, wobei die Trägerschicht (4) durch Thermobonding mit mindestens einem Teil ihrer Oberfläche direkt mit der unteren Oberfläche der wasserdichten Membran (2) zusammengefügt wird und wobei das mindestens eine Polymer **P2** in der Trägerschicht (4) in einer Menge von mindestens 50 Gew. -% vorliegt, wobei das mindestens eine Polymer **(P2)** aus Propylenhomopolymeren und Propylencopolymeren ausgewählt ist und die Trägerschicht (4) eine Dicke von 5-75 µm aufweist.

2. Dichtungsvorrichtung nach Anspruch 1, wobei das mindestens eine Polymer **P1** aus der Gruppe bestehend aus Ethylen-Vinylacetat-Copolymer (EVA), Ethylen-Acrylester-Copolymeren, Ethylen-α-Olefin-Copolymeren, EthylenPropylen-Copolymeren, Propylen-α-Olefin-Copolymeren, Polypropylen (PP), Polyethylen (PE), Polyvinylchlorid (PVC), Polyethylenterephthalat (PET), Polystyrol (PS), Polyamiden (PA), chlorsulfoniertem Polyethylen (CSPE), Ethylenpropylen-Dien-Kautschuk (EPDM) und Polyisobutylen (PIB) ausgewählt ist.

3. Dichtungsvorrichtung nach Anspruch 1 oder 2, wobei das mindestens eine Polymer **P2** mit dem mindestens einen Polymer **P1** mischbar, vorzugsweise mit dem mindestens einem Polymer **P1** verschweißbar ist.

4. Dichtungsvorrichtung nach einem der vorhergehenden Ansprüche, wobei das mindestens eine Polymer **P2** in der Trägerschicht (4) in einer Menge von mindestens 70 Gew.-%, bezogen auf das Gesamtgewicht der Trägerschicht (4), vorliegt.

5. Dichtungsvorrichtung nach einem der vorhergehenden Ansprüche, wobei die Trägerschicht (4) bei einer Temperatur von 23 °C einen Biegemodul, der unter Verwendung der wie in der ISO-Norm 178:2010 definierten Methode bestimmt wurde, im Bereich von 10-2500 MPa, vorzugsweise 250-2000 MPa, und/oder bei einer Temperatur von 23 °C einen Blockwert, der mittels der in der Beschreibung aufgeführten Methode bestimmt wurde, von nicht mehr als 2,5 N/15 mm, vorzugsweise nicht mehr als 1,0 N/15 mm, aufweist.

6. Dichtungsvorrichtung nach einem der vorhergehenden Ansprüche, wobei die Schutzfolie (3) ferner eine zweite Trägerschicht (6) und eine sich zwischen den Trägerschichten (4, 6) befindliche Barriereschicht (5) umfasst, wobei die Barriereschicht (5) direkt oder indirekt an die äußere Oberfläche der Trägerschicht (4), die der unteren Oberfläche der wasserdichten Membran (2) abgewandt ist, angefügt wird.

7. Dichtungsvorrichtung nach Anspruch 6, wobei die Barriereschicht (5) mindestens 70 Gew.-%, vorzugsweise mindestens 85 Gew.-%, bezogen auf das Gesamtgewicht der Barriereschicht (5), von mindestens einem Polymer **P4** umfasst, das aus der Gruppe bestehend aus Polyamid (PA), Polyethylenterepthalat (PET), Ethylenvinylalkohol (EVOH), Polyvinyldienchlorid (PVDC) und Polyethylen ausgewählt ist.

8. Dichtungsvorrichtung nach einem der Ansprüche 6 oder 7, wobei die Schutzfolie (3) ferner eine dritte Trägerschicht (8) und eine sich zwischen der zweiten und dritten Trägerschicht (6, 8) befindliche zweiten Barriereschicht (7) umfasst, wobei die zweite Barriereschicht (7) direkt oder indirekt mit der äußeren Oberfläche der zweiten Trägerschicht (6), die der unteren Oberfläche der wasserdichten Membran (2) abgewandt ist, verbunden ist.

9. Dichtungsvorrichtung nach einem der vorhergehenden Ansprüche, wobei die wasserdichte Membran (2) sich aus einer Zusammensetzung zusammensetzt, die Folgendes umfasst:
a') mindestens ein thermoplastisches Elastomer und
b') mindestens ein Elastomer.

10. Dichtungsvorrichtung nach Anspruch 9, wobei die Zusammensetzung 25-95 Gew.-%, vorzugsweise 30-90 Gew.-%, des mindestens einen thermoplastischen Elastomers und/oder 5-65 Gew.-%, vorzugsweise 10-50 Gew.-%, des mindestens einen Elastomers umfasst, wobei die Anteile sich auf das Gesamtgewicht der Zusammensetzung beziehen.

11. Dichtungsvorrichtung nach einem der Ansprüche 9 oder 10, wobei das mindestens eine Elastomer aus der Gruppe bestehend aus Butylkautschuken und halogenierten Butylkautschuken ausgewählt ist.

12. Verfahren zur Herstellung einer Dichtungsvorrichtung, das die folgenden Schritte umfasst:
i) Schmelzeverarbeiten einer thermoplastischen Zusammensetzung, die die Bestandteile einer wie in einem der Ansprüche 1-11 definierten wasserdichten Membran umfasst,
ii) Extrudieren der aus Schritt i) erhaltenen schmelzeverarbeiteten Zusammensetzung durch eine Extruderdüse und
iii) direktes Aufbringen der aus Schritt ii) erhaltenen extrudierten Formschmelze auf einer der Hauptoberflächen einer wie in einem der Ansprüche 1-11 definierten Trägerschicht oder
i') Bereitstellen einer wie in einem der Ansprüche 1-11 definierten wasserdichten Membran und
ii') Fixieren einer wie in einem der Ansprüche 1-11 definierten Trägerschicht auf einer der Hauptoberflächen der wasserdichten Membran durch Thermobonding.

13. Verwendung einer Schutzfolie, die eine wie in einem der Ansprüche 1-11 definierte Trägerschicht umfasst, zur Verringerung des Verblockens einer wasserdichten Membran, wobei die Trägerschicht durch Thermobonding mit mindestens einem Teil ihrer Oberfläche direkt mit der unteren Oberfläche der wasserdichten Membran zusammen gefügt wird.

14. Verwendung nach Anspruch 13, wobei der Blockwert, der mittels der in der Beschreibung aufgeführten Methode bestimmt wurde, auf einen Wert verringert wird, der mindestens 50 %, vorzugsweise mindestens 75 %, geringer als der Blockwert der wasserdichten Membran ohne die Schutzfolie auf der unteren Oberfläche der Membran ist.

15. Verfahren zum Decken eines Dachs, bei dem man:
i") zwei oder mehr Dichtungsvorrichtungen nach einem der Ansprüche 1-11 auf die Oberfläche des zu deckenden Dachs aufbringt,
ii") die aneinander grenzenden Ränder der Dichtungsvorrichtungen überlagert,
iii") die aneinander grenzenden Ränder der Dichtungsvorrichtungen in den sich überlagernden Bereichen auf knapp oberhalb der Schmelztemperatur der thermoplastischen Membran erwärmt und die sich überlagernden Bereiche unter einem Druck, der zur Bereitstellung einer angemessenen Bördelfestigkeit ausreichend ist, ohne Verwendung eines Klebstoffs verbördelt.

## Revendications

1. Dispositif d'étanchéité (1) comprenant :
a) une membrane d'imperméabilisation (2) possédant des surfaces supérieure et inférieure et comprenant au moins un polymère **P1** et
b) un film de protection (3) comprenant une couche de support (4) comprenant au moins un polymère **P2,** la couche de support (4) étant directement fixée sur au moins une partie de sa surface à la surface inférieure de la membrane d'imperméabilisation (2) par le biais d'une liaison thermique et l'au moins un polymère **P2** étant présent dans la couche de support (4) à raison d'au moins 50 % en poids, l'au moins un polymère **P2** étant choisi entre des homopolymères de propylène et des copolymères de propylène, et la couche de support (4) ayant une épaisseur de 5 à 75 µm.

2. Dispositif d'étanchéité selon la revendication 1, dans lequel l'au moins un polymère **P1** est choisi dans le groupe consistant en copolymère d'éthylène-acétate de vinyle (EVA), copolymères d'éthylène-ester acrylique, copolymères d'éthylène-α-oléfine, copolymères d'éthylène-propylène, copolymères de propylène-α-oléfine, polypropylène (PP), polyéthylène (PE), poly(chlorure de vinyle) (PVC), poly(éthylène téréphtalate) (PET), polystyrène (PS), polyamides (PA), polyéthylène chlorosulfoné (CSPE), caoutchouc éthylène-propylène-diène (EPDM) et polyisobutylène (PIB).

3. Dispositif d'étanchéité selon la revendication 1 ou 2, dans lequel l'au moins un polymère **P2** est miscible avec l'au moins un polymère **P1**, de préférence soudable avec l'au moins un polymère **P1**.

4. Dispositif d'étanchéité selon l'une quelconque des revendications précédentes, dans lequel l'au moins un polymère **P2** est présent dans la couche de support (4) à raison d'au moins 70 % en poids, par rapport au poids total de la couche de support (4).

5. Dispositif d'étanchéité selon l'une quelconque des revendications précédentes, dans lequel la couche de support (4) a un module d'élasticité en flexion, déterminé à l'aide du procédé selon la norme ISO 178:2010 à une température de 23 °C, dans la plage de 10 à 2 500 MPa, de préférence 250 à 2 000 MPa et/ou une valeur de blocage, déterminée au moyen du procédé mentionné dans la description à une température de 23 °C, inférieure ou égale à 2,5 N/15 mm, de préférence inférieure ou égale 1,0 N/15 mm.

6. Dispositif d'étanchéité selon l'une quelconque des revendications précédentes, dans lequel le film de protection (3) comprend en outre une deuxième couche de support (6) et une couche barrière (5) située entre les couches de support (4, 6), dans lequel la couche barrière (5) est directement ou indirectement fixée à la surface externe de la couche de support (4) à l'opposé de la surface inférieure de la membrane d'imperméabilisation (2).

7. Dispositif d'étanchéité selon la revendication 6, dans lequel la couche barrière (5) comprend au moins 70 % en poids, de préférence au moins 85 % en poids, rapporté au poids total de la couche barrière (5), d'au moins un polymère **P4** sélectionné dans le groupe consistant en polyamide (PA), poly(éthylène téréphtalate) (PET), éthylène/alcool vinylique (EVOH), poly(chlorure de vinylidène) (PVDC) et polyéthylène.

8. Dispositif d'étanchéité selon l'une quelconque des revendications 6 et 7, dans lequel le film de protection (3) comprend en outre une troisième couche de support (8) et une seconde couche barrière (7) située entre les deuxième et troisième couches de support (6, 8), dans lequel la seconde couche barrière (7) est directement ou indirectement reliée à la surface externe de la deuxième couche de support (6) à l'opposé de la surface inférieure de la membrane d'imperméabilisation (2).

9. Dispositif d'étanchéité selon l'une quelconque des revendications précédentes, dans lequel la membrane d'imperméabilisation (2) est composée d'une composition comprenant :
a') au moins un élastomère thermoplastique et
b') au moins un élastomère.

10. Dispositif d'étanchéité selon la revendication 9, dans lequel la composition comprend 25 à 95 % en poids, de préférence 30 à 90 % en poids, de l'au moins un élastomère thermoplastique et/ou 5 à 65 % en poids, de préférence 10 à 50 % en poids, de l'au moins un élastomère, lesdites proportions étant rapportées au poids total de la composition.

11. Dispositif d'étanchéité selon l'une quelconque des revendications 9 et 10, dans lequel l'au moins un élastomère est choisi dans le groupe consistant en caoutchoucs butyle et caoutchoucs halobutyle.

12. Procédé permettant de produire un dispositif d'étanchéité comprenant les étapes de :
i) traitement par fusion d'une composition thermoplastique comprenant les constituants d'une membrane d'imperméabilisation selon l'une quelconque des revendications 1 à 11,
ii) extrusion de la composition traitée par fusion obtenue de l'étape i) à travers une filière d'extrudeuse, et
iii) application de la fonte formée extrudée obtenue de l'étape ii) directement sur une des surfaces principales d'une couche de support selon l'une quelconque des revendications 1 à 11 ou
i') fourniture d'une membrane d'imperméabilisation selon l'une quelconque des revendications 1 à 11 et
ii') liaison d'une couche de support selon l'une quelconque des revendications 1 à 11 sur une des surfaces principales de la membrane d'imperméabilisation par le biais d'une liaison thermique.

13. Utilisation d'un film de protection comprenant une couche de support selon l'une quelconque des revendications 1 à 11 pour réduire le blocage d'une membrane d'imperméabilisation, dans laquelle la couche de support est directement fixée sur au moins une partie de sa surface à la surface inférieure de la membrane d'imperméabilisation par le biais d'une liaison thermique.

14. Utilisation selon la revendication 13, dans laquelle la valeur de blocage de la membrane d'imperméabilisation, déterminée au moyen du procédé mentionné dans la description, est réduite à une valeur, qui est plus petite d'au moins 50 %, de préférence plus petite d'au moins 75 % que la valeur de blocage de la membrane d'imperméabilisation sans le film de protection sur la surface inférieure de la membrane.

15. Procédé de couverture d'un toit comprenant les étapes de :
i'') application de deux dispositifs d'étanchéité ou plus selon l'une quelconque des revendications 1 à 11 sur la surface du toit à couvrir,
ii'') chevauchement des bords adjacents desdits dispositifs d'étanchéité,
iii") chauffage des bords adjacents des dispositifs d'étanchéité dans les zones de chevauchement légèrement au-dessus de la température de fusion de la membrane thermoplastique et sertissage des zones de chevauchement sous une pression suffisante pour fournir une résistance de sertissage acceptable sans utiliser d'adhésif.
